# EUROPEAN PATENT APPLICATION

(11) **EP 4 401 030 A1**
(43) Date of publication of application: **17.07.2024**
(21) Application number: 22867636.7
(22) Date of filing: 02.09.2022
(51) Int. Cl.: G06Q 50/10, G06Q 50/30, H04N 21/2187, H04N 23/60, H04N 5/77, H05B 47/105, G09F 19/00

(54) **ONLINE MANAGEMENT METHOD FOR BODYBUILDING COMPETITION, AND SYSTEM THEREFOR**

(30) Priority: 07.09.2021 KR 20210119215; 25.08.2022 KR 20220107160
(71) Applicant: DRAX Inc., Anyang-si, Gyeonggi-do 14086 (KR)
(72) Inventor: YOO, Seon Kyung, Seoul 08251 (KR)
(74) Representative: Mewburn Ellis LLP
(86) International application number: PCT/KR2022/013185
(87) International publication number: WO 2023/038367

(57) **Abstract**

Provides are an online management method for a bodybuilding competition and a system for the online management method. The online management method for a bodybuilding competition includes determining whether bodybuilding images conform to rules of the bodybuilding competition, dividing each of the bodybuilding images conforming to the rules into a plurality of pose images, and determining a winning bodybuilding image by using scores for identical-pose images among the bodybuilding images conforming to the rules.

## Description

### Technical Field

The present disclosure relates to an online management method for a bodybuilding competition and a system for the online management method.

### Background Art

Bodybuilding is also called muscle building. In bodybuilding competitions, weight classes are classified according to participants' weights, and rankings are determined in each weight class by judging the shape and size of muscles, the degree of balanced development and symmetry of muscles, skin color, skeleton, and posture.

As interest in health increases, bodybuilding competitions are also becoming more active. However, when highly contagious diseases become prevalent or the number of contestants participating in competitions increases, there are limits to hosting bodybuilding competitions offline.

### Disclosure

### Technical Problem

The present disclosure provides a remote or online management method for a bodybuilding competition and a system for the remote or online management method.

### Technical Solution

According to an embodiment, an online management method for a bodybuilding competition includes determining whether bodybuilding images conform to rules of the bodybuilding competition, dividing each of bodybuilding images conforming to the rules into a plurality of pose images, transmitting identical-pose images among the bodybuilding images conforming to the rules to a judge terminal; determining a winning bodybuilding image by using scores received from the judge terminal for the identical-pose images.

In addition, the online management method may further include classifying the bodybuilding images based on categories and weight classes of the bodybuilding competition.

In addition, the determining of the winning bodybuilding image may include transmitting first identical-pose images among the bodybuilding images conforming to the rules to the judge terminal, receiving scores for the first identical-pose images from the judge terminal, transmitting second identical-pose images among the bodybuilding images conforming to the rules to the judge terminal, receiving scores for the second identical-pose images from the judge terminal, and determining the winning bodybuilding image using the scores for the first identical-pose images and the scores for the second identical-pose images.

In addition, the receiving of the scores for the first identical-pose images may include receiving a score for each of the first identical-pose images.

In addition, the transmitting of the second identical-pose images may include transmitting, to the judge terminal, only second identical-pose images that correspond to first identical-pose images having scores greater than or equal to a reference value.

In addition, the receiving of the scores for the first identical-pose images may include receiving scores for some of the first identical-pose images, and the transmitting of the second identical-pose images may include transmitting only second identical-pose images that correspond to the first identical-pose images of which the scores are received.

In addition, the determining of the winning bodybuilding image may include determining a plurality of winning-candidate bodybuilding images using the scores, transmitting the plurality of winning-candidate bodybuilding images to the judge terminal, receiving, from the judge terminal, final scores respectively for the plurality of winning-candidate bodybuilding images, and determining the winning bodybuilding image using the final scores.

In addition, the determining of whether the bodybuilding images conform to the rules may include determining whether the bodybuilding images conform to the rules, based on at least one of dress code violation, pose violation, whether props are worn, whether a plurality of bodybuilding images are images of an identical person, and whether mandatory poses are included.

According to an embodiment, a competition server for a bodybuilding competition includes: a communication unit configured to receive bodybuilding images from an external device; and a processor configured to determine whether the bodybuilding images conform to rules of the bodybuilding competition, divide each of bodybuilding images conforming to the rules into a plurality of pose images, transmit identical-pose images among the bodybuilding images conforming to the rules to a judge terminal through the communication unit, and determine a winning bodybuilding image by using scores received from the judge terminal for the identical-pose images.

In addition, the processor may be further configured to transmit first identical-pose images among the bodybuilding images conforming to the rules to the judge terminal through the communication unit, receive scores for the first identical-pose images from the judge terminal, transmit second identical-pose images among the bodybuilding images conforming to the rules to the judge terminal, receive scores for the second identical-pose images from the judge terminal, and determine the winning bodybuilding image by using the scores for the first identical pose-images and the scores for the second identical-pose images.

In addition, the processor may be further configured to determine a plurality of winning-candidate bodybuilding images by using the scores, transmit the plurality of winning-candidate bodybuilding images to the judge terminal, receive final scores respectively for the plurality of winning-candidate bodybuilding images from the judge terminal, and determine the winning bodybuilding image by using the final scores.

In addition, the processor may be further configured to determine whether the bodybuilding images conform to the rules, based on at least one of dress code violation, pose violation, whether props are worn, whether a plurality of bodybuilding images are images of an identical person, and whether mandatory poses are included.

### Advantageous Effects

According to embodiments, an online management method for a bodybuilding competition and a system for the online management method may be performed and operated without restrictions on time and place, thereby contributing to activating bodybuilding competitions.

According to embodiments, the online management method for a bodybuilding competition and the system for the online management method may facilitate evaluation processes by displaying a plurality of bodybuilding images on one screen.

The online management method for a bodybuilding competition and the system for the online management method may improve the accuracy of evaluation by displaying, on one screen, a plurality of pose images captured at different angles.

### Description of Drawings

FIG. 1 is a diagram schematically illustrating an online management system for a bodybuilding competition according to an embodiment.
FIG. 2 is a block diagram schematically illustrating a contestant terminal according to an embodiment.
FIG. 3 is a block diagram schematically illustrating a competition server according to an embodiment.
FIG. 4 is a block diagram schematically illustrating a judge terminal according to an embodiment.
FIG. 5 is a reference diagram illustrating a management method for a bodybuilding competition according to an embodiment.
FIG. 6 is a diagram illustrating a portion of the contestant terminal according to an embodiment.
FIG. 7 is a diagram illustrating a tree of bodybuilding images conforming to rules stored in the competition server according to an embodiment.
FIG. 8 is a reference diagram illustrating a method of inputting scores for a plurality of images according to an embodiment.
FIG. 9 is a reference diagram illustrating a method of inputting scores for a plurality of images according to another embodiment.

### Mode for Invention

The terms used in the present disclosure are general terms currently widely used in the art in consideration of functions regarding the present disclosure, but the terms may vary according to the intention of those of ordinary skill in the art, precedents, or new technology in the art. Also, some terms may be arbitrarily selected by the applicant, and in this case, the meaning of the selected terms will be described in the detailed description of the present disclosure. Thus, the terms used herein should not be construed based on only the names of the terms but should be construed based on the meaning of the terms together with the description throughout the present disclosure.

It will be understood that although terms such as "first" and "second" are used herein to describe various elements, these elements should not be limited by these terms. These terms are only used to distinguish one element from other elements.

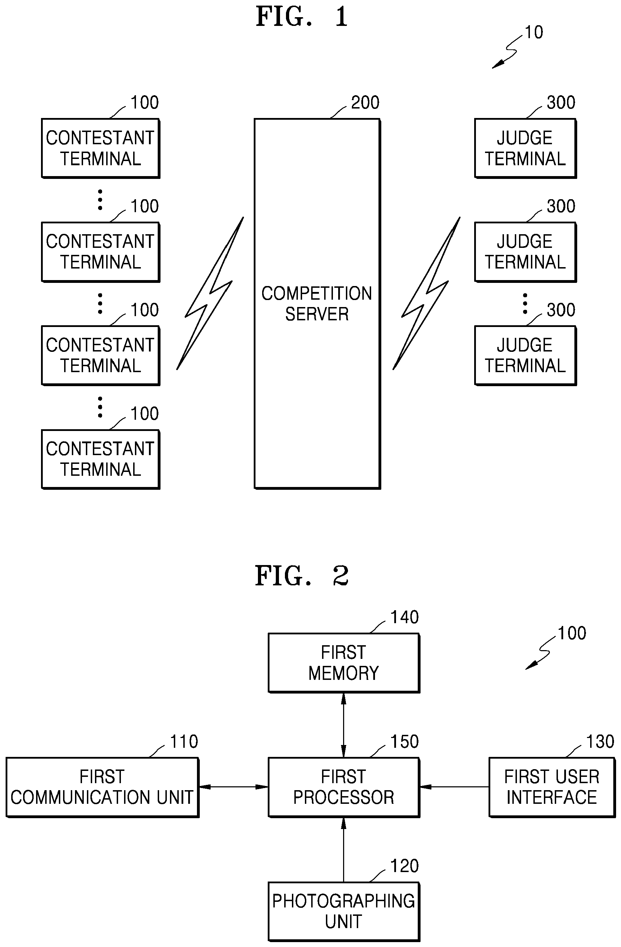

FIG. 1 is a diagram schematically illustrating an online management system 10 for a bodybuilding competition according to an embodiment. Referring to FIG. 1, the online management system 10 includes a contestant terminal 100, a competition server 200, and a judge terminal 300 that communicate with each other through one or more wired or wireless networks.

The networks may be implemented in various wired and wireless forms such as local area network (LAN), wide area network (WAN), value added network (VAN), personal area network (PAN), mobile radio communication network, or satellite communication network.

FIG. 2 is a block diagram schematically illustrating the contestant terminal 100 according to an embodiment. Referring to FIG. 2, the contestant terminal 100 may include a first communication unit 110 configured to communicate with an external terminal such as the competition server 200 through a network, a photographing unit 120 configured to capture bodybuilding images, a first user interface 130 configured to receive information on contestants, a first memory 140 storing the bodybuilding images and the information on contestants, and a first processor 150 configured to perform all functions of the contestant terminal 100.

There are various categories in bodybuilding competitions. For example, bodybuilding competitions may have categories such as bikini, wellness, figure, men's physique, classic physique, or bodybuilding. Herein, bodybuilding images refer to all images in categories of bodybuilding competitions, and do not only refer to images in a bodybuilding category of a bodybuilding competition.

Rules such as dress code rules or pose rules may vary depending on categories of bodybuilding competitions. In addition, weight classes may be differently defined in different categories. Weight classes of a bodybuilding competition may include true novice, novice, junior, masters, and open weight classes.

The photographing unit 120 may include a camera capable of photographing contestants. The photographing unit 120 may include a plurality of cameras to photograph contestants' poses from various angles. For example, the photographing unit 120 may include a first photographing unit for photographing the front of a contestant, a second photographing unit for photographing the rear of the contestant, and a third photographing unit for photographing a side of the contestant.

A contestant may take poses corresponding to a bodybuilding category in front of the photographing unit 120, and the photographing unit 120 may generate a bodybuilding image including the contestant's poses.

The contestant may input, through the first user interface 130, personal information such as name, age, gender, weight, height, and contact information before or after photographing. The contestant may input, through the first user interface 130, information about bodybuilding images, for example, information about a competition category and weight class.

The first processor 150 may match contestant information, generated bodybuilding images, and information on the bodybuilding images with each other, and may store them in the first memory 140 or transmit them to the competition server 200 through the first communication unit 110.

The contestant terminal 100 may further include a device capable of measuring contestant's physical information such as weight and height.

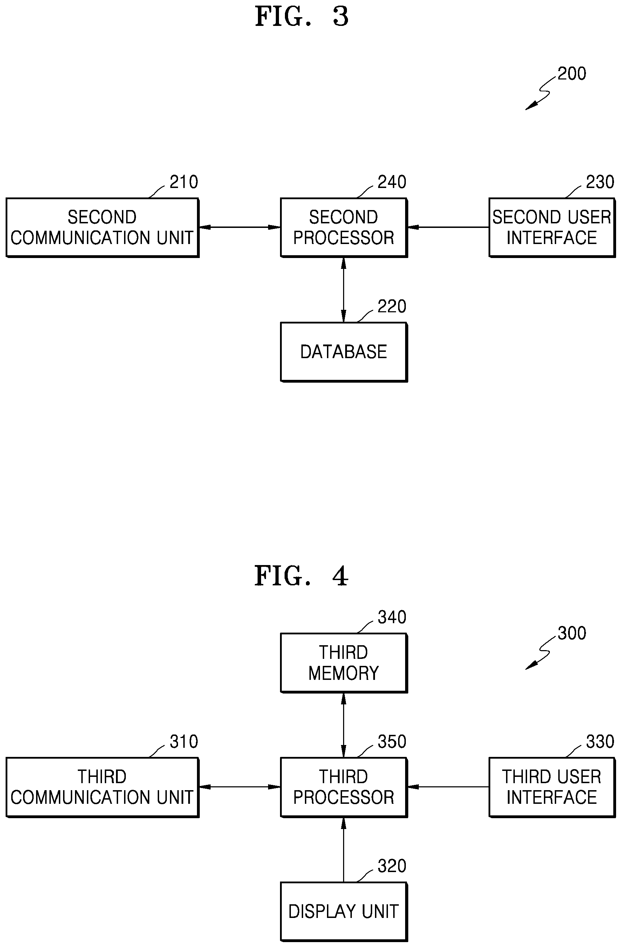

FIG. 3 is a block diagram schematically illustrating the competition server 200 according to an embodiment. Referring to FIG. 3, the competition server 200 may be a server that manages an Internet site. The competition server 200 may have a function of managing or supporting a dedicated app and/or a dedicated web program that are connected to the contestant terminal 100, the judge terminal 300, and the like. In addition, the competition server 200 may have a function of supporting interfaces such as an application programming interface (API) necessary for building applications on a web/app, thereby making it possible to run applications for implementing a content platform for digital information display.

The competition server 200 may include: a second communication unit 210 configured to communicate with external terminals such as the contestant terminal 100 and the judge terminal 300 through a network; a database 220 storing information such as bodybuilding images, contestant information corresponding to each bodybuilding image, scores of bodybuilding images, and information about rules of each completion category; a second user interface 230 configured to receive commands from users such as an administrator who manages the competition server 200; and a second processor 240 configured to perform all functions of the competition server 200.

The second processor 240 may store, in the database 220, bodybuilding images received from the contestant terminal 100 through the second communication unit 210. The second processor 240 may store bodybuilding images by classifying the bodybuilding images according to competition categories and weight classes. For example, contestants may input competition categories and weight classes, and then, the second processor 240 may classify and store bodybuilding images based on the competition categories and the weight classes that are input by the users.

The second processor 240 may classify bodybuilding images into a first bodybuilding image group conforming to rules and a second bodybuilding image group violating the rules. The second processor 240 may read bodybuilding images of the same competition category and weight class among bodybuilding images that are stored in the database 220 based on competition categories and weight classes. In addition, the second processor 240 may classify bodybuilding images of the same competition category and weight class into a first bodybuilding image group and a second bodybuilding image group.

A bodybuilding competition may have rules for each category, such as dress code rules, pose rules, music rules, and rules regulating props. For example, contestants should wear two-piece competition suits in a wellness category, and contestants should wear posing trunks in a bodybuilding category. In addition, contestants may be allowed to wear accessories in the wellness category, but may not be allowed to wear accessories in the bodybuilding category. Information on such various rules of competition categories and weight classes are previously stored in the database 220.

For example, male contestants participating in the bodybuilding category should wear posing trunks, and the posing trunks should have a single color. When it is determined, using image analysis techniques or the like, that a male contestant appearing in a bodybuilding image is not wearing posing trunks, or the posing trunks are not single colored but are shiny, fluorescent, or decorated with an accessory, the second processor 240 may classify the bodybuilding image into the second bodybuilding image group. The image analysis techniques are used to recognize the shape of an object such a contestant included in an image and detect and track the movement of the object. A variety of commercialized image analysis techniques such as intelligent image analysis techniques, deep learning image analysis techniques, or Al image analysis techniques may be used. Such mage analysis techniques are common techniques, and thus, detailed descriptions thereof are omitted.

The second processor 240 may use acoustic analysis techniques or the like to classify a bodybuilding image into the second bodybuilding image group when a posing music included in the bodybuilding image contains vulgar or swear words. Various commercially available acoustic analysis techniques may be used, and thus, detailed descriptions thereof are omitted.

The second processor 240 may classify a bodybuilding image into the second bodybuilding image group when the second processor 240 determines, using image analysis techniques or the like, that a contestant appearing in the bodybuilding image is wearing an accessory, a ring, sunglasses, or a prop, chewing gum, taking a moon pose (a pose in which the contestant spreads his/her legs and bends his/her upper body to look at the other side between his/her legs), or wearing a number tag that does not conforming to rules.

When the second processor determines, using a face recognition function or the like, that the same person is included in a plurality of bodybuilding images, the second processor 240 may classify the plurality of bodybuilding images into the second bodybuilding image group.

As described above, the second processor 240 classifies bodybuilding images that violate rules as the second bodybuilding image group, and classifies bodybuilding images that do not violate rules, that is, conform to rules, as the first bodybuilding image group. The competition server 200 may notify contestants of results of the classification by using contestant information corresponding to the bodybuilding images that violate rules. The second processor 240 may provide the contestants with a text message or image showing specific grounds for a rule violation.

The second processor 240 may not transmit, to the judge terminal 300, the second bodybuilding image group that violates rules, thereby increasing the efficiency of judging in a bodybuilding competition

For the judge terminal 300, the second processor 240 may divide the bodybuilding images included in the first bodybuilding image group into pose images. The pose images may be still images including specific poses, or may be moving images including specific poses.

Bodybuilding images may be classified into images containing free poses and images containing mandatory poses. Mandatory poses may vary depending on bodybuilding competition categories. For example, mandatory poses of a bodybuilding category may include front double biceps, front lat spread, side chest, back double biceps, back lat spread, side triceps, abdominal and thigh, and the like. Mandatory poses of a wellness category may include quarter turn right, quarter turn rear, model walking, and the like.

While a contestant is taking mandatory poses, the contestant terminal 100 may generate a bodybuilding image. The bodybuilding image may be a single file in which the mandatory poses are continuously connected. The second processor 240 may use an image recognition technique to recognize the mandatory poses included in the bodybuilding image and divide the bodybuilding image into pose images each containing one mandatory pose.

Alternatively, a contestant may take pictures on a pose basis, and the contestant terminal 100 may generate pose image files on a pose basis and then transmit the pose image files as one group to the competition server 200.

The second processor 240 may determine whether a plurality of pose images agree with a category of a bodybuilding competition. For example, when the category of bodybuilding images is classic physique, mandatory poses may include front double biceps, side chest, back double biceps, and abdominal and thigh. The second processor 240 may determine whether the pose images include the poses mentioned above, and when one or more of the poses mentioned above is missing, the second processor 240 may determine the pose images as bodybuilding images violating rules. In addition, when a bodybuilding image includes a quarter turn pose that is not a mandatory pose of classic physique, the second processor 240 may determine that the bodybuilding image violates rules.

The second processor 240 may classify bodybuilding images conforming to rules based on poses and may store the bodybuilding images in the database 220.

The second processor 240 of the competition server 200 may transmit the bodybuilding images included in the first bodybuilding image group to the judge terminal 300 through the second communication unit 210. The competition server 200 may simultaneously transmit identical-pose images of different contestants. Alternatively, the competition server 200 may transmit bodybuilding images of a contestant. Alternatively, the competition server 200 may transmit pose images captured at different angles among identical-pose images of a contestant. The method in which the competition server 200 transmits bodybuilding images to the judge terminal 300 may vary depending on a judging method or a request from the judge terminal 300.

FIG. 4 is a block diagram schematically illustrating the judge terminal 300 according to an embodiment. Referring to FIG. 4, the judge terminal 300 may include: a third communication unit 310 configured to communicate with external terminals such as the competition server 200 through a network; a display unit 320 configured to display bodybuilding images; a third user interface 330 configured to receive evaluation results from judges; a second memory 340 storing bodybuilding images and evaluation results; and a third processor 350 configured to perform all functions of the judge terminal 300.

The display unit 320 may display bodybuilding images received from the competition server 200 through the third communication unit 310.

The display unit 320 may simultaneously display identical-pose images of different contestants. Because the display unit 320 simultaneously displays identical-pose images of different contestants, judges may easily perform relative evaluation with respect to the same pose.

The display unit 320 may simultaneously display identical-pose images of a contestant that are taken from different angles. Because it is possible to judge different aspects of the same pose on one screen, the accuracy of evaluation may be improved compared to offline evaluation.

Because the judge terminal 300 is capable of display a plurality of images simultaneously on one display unit, that is, the display unit 320, the accuracy and simplicity of evaluation may be improved compared to offline evaluation.

Judges may input scores for a plurality of identical-pose images through the third user interface 330. Judges may input a score for each of a plurality of identical-pose images through the third user interface 330. Alternatively, judges may enter a user command to select only images of a winning candidate from a plurality of identical-pose images.

The judge terminal 300 may transmit scores input by judges to the competition server 200, and the competition server 200 may calculate rankings of bodybuilding images based on the scores and transmit results of the calculation to the judge terminal 300 or terminals of contestants.

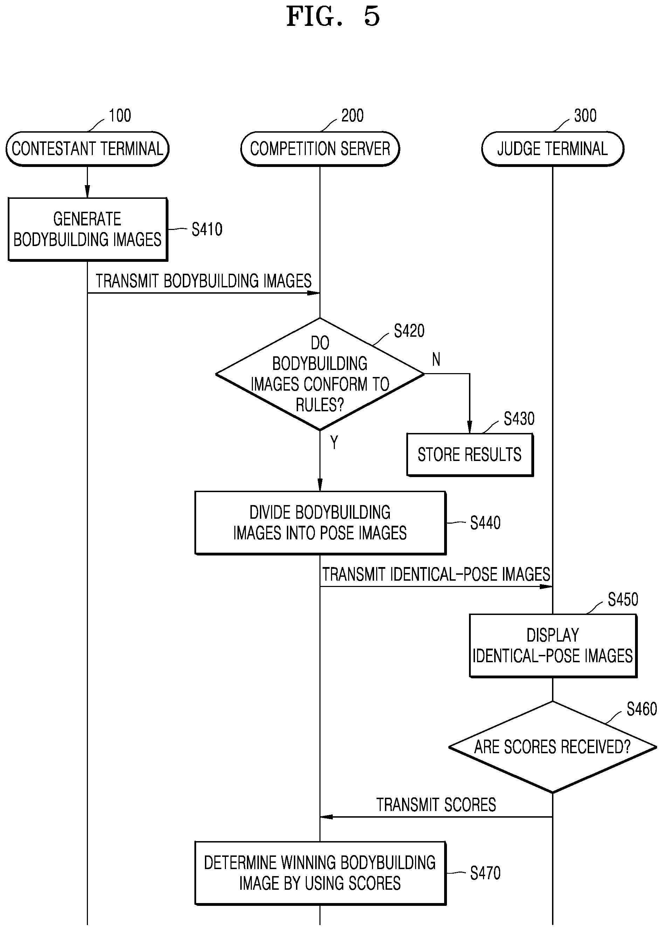

FIG. 5 is a reference diagram illustrating a management method for a bodybuilding competition according to an embodiment.

Referring to FIG. 5, the contestant terminal 100 may generate bodybuilding images (S410). The contestant terminal 100 may include the photographing unit 120 capable of photographing contestants. The contestant terminal 100 may include a plurality of photographing units to photograph contestant's poses from various angles.

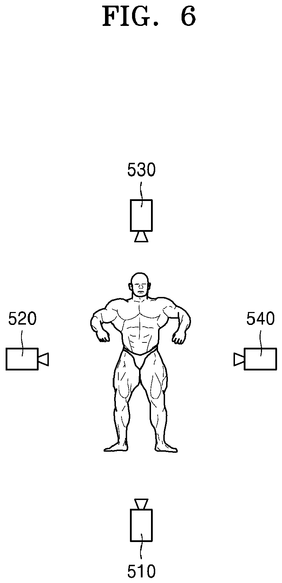

FIG. 6 is a diagram illustrating a portion of the contestant terminal 100 according to an embodiment. As shown in FIG. 6, the contestant terminal 100 may include a first photographing unit 510 for photographing the front of a contestant, a second photographing unit 520 for photographing the right side of the contestant, a third photographing unit 530 for photographing the rear of the contestant, and a fourth photographing unit 540 for photographing the left side of the contestant.

The contestant may take poses corresponding to a bodybuilding category in front of the photographing unit 120, and the photographing unit 120 may generate bodybuilding images including the contestant's poses.

The contestant may input personal information such as name, age, gender, weight, height, contact information, and the like through the first user interface 130. The contestant may input information about the bodybuilding images, for example, information about a competition category or weight class through the first user interface 130.

The first processor 150 may match contestant information, generated bodybuilding images, and information about the bodybuilding images with each other and may transmit them to the competition server 200 through the first communication unit 110.

Although one contestant terminal 100 is shown in the drawings, this is only for ease of illustration, and a plurality of contestant terminals 100 may be provided. Each contestant terminal 100 may generate bodybuilding images and transmit the bodybuilding images to the competition server 200. In addition, one contestant terminal 100 may generate a plurality of bodybuilding images of different contestants. For example, one contestant terminal 100 may generate a bodybuilding image of a first contestant by photographing poses of the first contestant and may transmit the bodybuilding image to the competition server 200, and may generate a bodybuilding image of a second contestant by photographing poses of the second contestant and may transmit the bodybuilding image to the competition server 200.

The competition server 200 may determine whether the bodybuilding images conform to rules (S420). The competition server 200 may classify the bodybuilding images based on competition categories and weight classes, and may determine whether the bodybuilding images conform to rules of each competition category and weight class.

A bodybuilding competition may have rules for each competition category, such as dress code rules, pose rules, and music prop rules allowing or not allowing the wearing of music props. The database 220 of the competition server 200 may previously store items that violate rules. When a bodybuilding image does not violate rules, the competition server 200 may primarily determine that the bodybuilding image conforms to the rules.

When the competition server 200 determines that a bodybuilding image violates rules, the competition server 200 may store the result of determination and the bodybuilding image in the database 220, or may notify a contestant terminal of the result of determination by using contestant personal information (S430).

For the judge terminal 300, the competition server 200 may divide bodybuilding images that are primarily determined as conforming to rules into pose images. The second processor 240 may determine whether a plurality of pose images agree with a competition category of a bodybuilding competition. When one or more of mandatory poses of the completion category are not included in the pose images, the second processor 240 may secondarily determine that the pose images violate the rules. In addition, when the pose images include mandatory poses of other competition categories, the second processor 240 may secondarily determine that the pose images violate rules.

The second processor 240 may classify, based on poses, bodybuilding images that are finally determined as conforming to the rules and may store the bodybuilding images in the database 220 (S440).

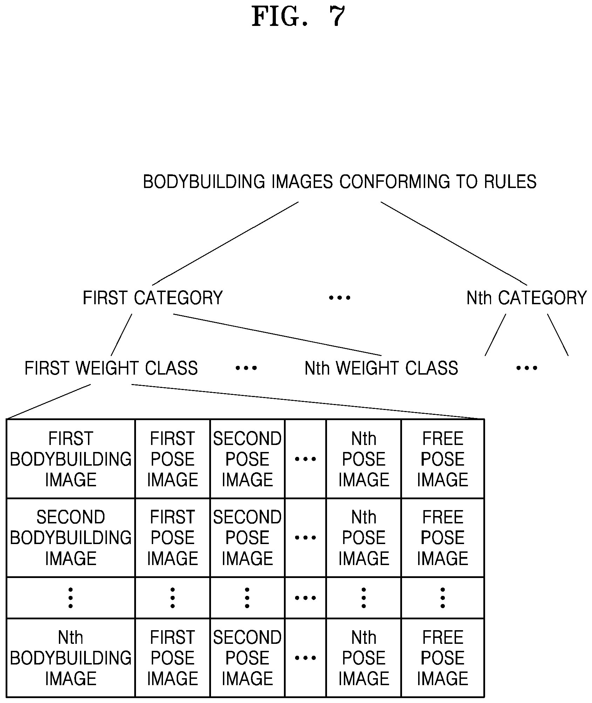

FIG. 7 is a diagram illustrating a tree of bodybuilding images conforming to rules stored in the competition server 200, according to an embodiment. As shown in FIG. 7, the bodybuilding images conforming to rules may be classified by competition category, and each competition category may be divided by weight class. Ane or more bodybuilding images may be stored in each weight class. The bodybuilding images may be stored by classifying the bodybuilding images according to poses and free poses.

The competition server 200 may transmit the bodybuilding images conforming to rules to the judge terminal 300. The competition server 200 may simultaneously transmit identical-pose images of different contestants.

The judge terminal 300 may display identical-pose images of different contestants (S450). Bodybuilding image of one competition category may include a plurality of pose images. For example, when bodybuilding images of one competition category include first-pose to third-pose images, the competition server 200 may transmit first-pose images of different contestants to the judge terminal 300. Thereafter, the competition server 200 may sequentially transmit second-pose images and third-pose images of the different contestants to the judge terminal 300.

The judge terminal 300 may receive a score for each identical-pose image through the third user interface 330 (S460). Identical-pose Images of different contestants may be displayed simultaneously on the display unit 320 of the judge terminal 300. Judges may input scores for pose images through the third user interface 330.

When scores for pose images are input, the judge terminal 300 may transmit the scores for the pose images to the competition server 200.

The competition server 200 may determine a winning bodybuilding image using the scores (S470). When there are a plurality of pose images, the competition server 200 may determine a winning bodybuilding image by adding up scores for the pose images. For example, the competition server 200 transmits first identical-pose images of different contestants to the judge terminal 300 and receives scores for the first identical-pose images from the judge terminal 300. Then, the competition server 200 transmits second identical-pose images of the different contestants to the judge terminal 300 and receives scores for the second identical-pose images from the judge terminal 300. The competition server 200 may determine a winning bodybuilding image among a first bodybuilding image group by using the scores for the first identical-pose images and the scores for the second- pose images.

Alternatively, when pose images have different weightings, the competition server 200 may determine a winning bodybuilding image by using scores and weightings for the pose images.

A winning bodybuilding image may be determined using scores for pose images, but is not limited thereto. The competition server 200 may determine a plurality of winning-candidate bodybuilding images by using scores for pose images and may transmit the winning-candidate bodybuilding images to the judge terminal 300. After evaluating the winning-candidate bodybuilding images, judges may input final scores for the winning-candidate bodybuilding images through the third user interface 330. The winning-candidate bodybuilding images may each be an image including a plurality of pose images, for example, an original bodybuilding image captured by a contestant using the contestant terminal 100. The winning-candidate bodybuilding images may be displayed on one screen of the judge terminal 300. Judges may select and play the winning-candidate bodybuilding images one by one and may enter scores.

The judge terminal 300 may transmit the final scores to the competition server 200, and the competition server 200 may use the final scores to finally determine a winning bodybuilding image.

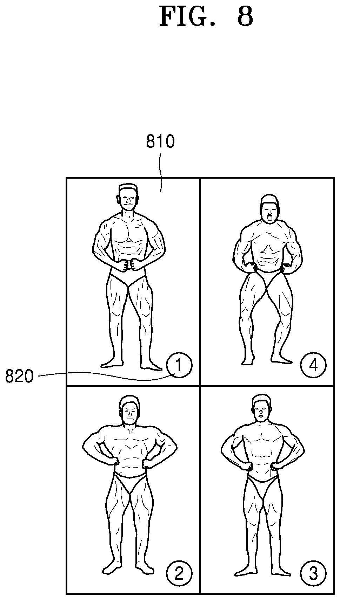

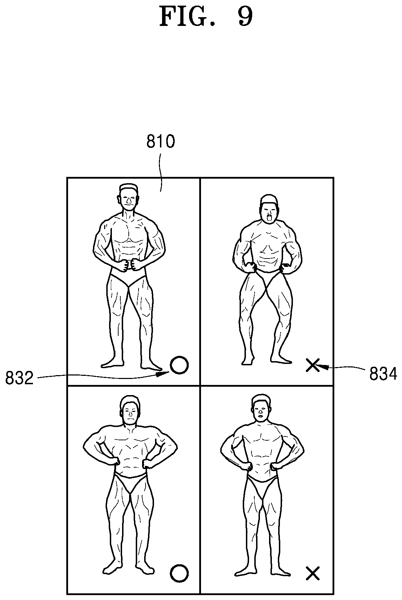

FIGS. 8 and 9 are reference diagrams illustrating a method of inputting scores for a plurality of images according to an embodiment. As shown in FIG. 8, a judge may input scores 820 respectively for pose images 810. Each of the input scores 820 may be displayed in a corresponding pose image 810. In bodybuilding competitions, a winning bodybuilding image are determined based on relative scores, and judges may change the rankings of pose images by modifying scores for the pose images.

Alternatively, as shown in FIG. 9, a judge may input a pass 832 or a fail 834 as a score for each pose image. Contestants corresponding to only some bodybuilding images are awarded in bodybuilding competitions. Therefore, not all the pose images need to be scored. The judge may input a pass 832 or a fail 834 as a score for a pose image, and the judge terminal 300 may transmit information only about pose images with the pass 832 to the competition server 200. The competition server 200 may transmit only a next pose image corresponding to a passed pose image to the judge terminal 300. For example, as shown in FIG. 9, the competition server 200 may transmit, to the judge terminal 300, only a second identical-pose image corresponding to a first identical-pose image 810 that is marked as passed among first identical-pose images.

Alternatively, even when scores are given for all identical-pose images, the competition server 200 may transmit, to the judge terminal 300, only second identical-pose images corresponding to first identical-pose images that have received scores greater than or equal to a reference value.

As described above, while evaluating bodybuilding images, the number of wining-candidate bodybuilding images may be sequentially reduced, thereby preventing an increase in the burden of evaluation work.

The methods of the embodiments of the present disclosure may be implemented in the form of program instructions executable using various computer means and may be recorded on a computer-readable recording medium. The computer-readable recording medium may include any one of or a combination of program instructions, data files, data structures, and the like. The program instructions recorded in the computer-readable recording medium may be those designed and configured according to the present disclosure or well known to those of ordinary skill in the computer software industry. Examples of the computer-readable recording medium may include: magnetic media such as hard disks, floppy disks, and magnetic tapes; optical media such as CD-ROMs and DVDs; magneto-optical media such as floptical disks; and hardware such as ROMs, RAMs, and flash memories specifically configured to store program instructions and execute the program instructions. Examples of the program instructions may include machine codes made by compilers and high-level language codes executable on computers using interpreters or the like.

Some embodiments of the present disclosure may be implemented in the form of a computer-readable recording medium including instructions executable on a computer such as program modules executable on a computer. The computer-readable recording medium may include any available medium that can be accessed by a computer, and examples of the computer-readable recording medium may include volatile and nonvolatile media, and removable and non-removable media. In addition, examples of the computer-readable recording medium may include computer storage media and communication media. Examples of the computer storage media include volatile and nonvolatile media, and removable and non-removable media that are implemented in any method or technique for storing information such as computer-readable instructions, data structures, program modules, or other data. Typical examples of the communication media include computer readable instructions, data structures, program modules, data in a modulated data signal such as carrier waves, transmission mechanisms, and information delivery media. In addition, some embodiments of the present disclosure may be implemented as a computer program or computer program product that includes instructions executable by a computer.

The computer-readable recording medium may be provided in the form of a non-transitory storage medium. Herein, the term "non-transitory" simply means that the storage medium is a tangible device, but this term does not differentiate between in which data is semi-permanently stored in the storage medium and in which the data is temporarily stored in the storage medium. For example, the "non-transitory storage medium" may include a buffer in which data is temporarily stored.

The methods of the various embodiments of the present disclosure may be included and provided in a computer program product. The computer program product may be traded as a product between a seller and a buyer. The computer program product may be distributed in the form of a machine-readable storage medium (for example, compact disc read only memory (CD-ROM)), or be distributed (for example, downloaded or uploaded) online via an application store, or between two user devices (for example, smart phones) directly. If distributed online, at least part of the computer program product (downloadable app) may be temporarily generated or at least temporarily stored in a storage medium, such as memory of the manufacturer's server, a server of the application store, or a relay server

Preferred embodiments have been mainly described. It will be understood by those skilled in the art that various changes in form and details may be made without departing from the spirit and scope of the present disclosure. Therefore, the preferred embodiments should be considered in descriptive sense only and not for purposes of limitation. The scope of the present disclosure is defined not by the detailed description but by the appended claims, and all differences within the scope will be construed as being included in the present disclosure.

## Claims

1. An online management method for a bodybuilding competition, the online management method comprising:
determining whether bodybuilding images conform to rules of the bodybuilding competition;
dividing each of bodybuilding images conforming to the rules into a plurality of pose images;
transmitting identical-pose images among the bodybuilding images conforming to the rules to a judge terminal; and
determining a winning bodybuilding image by using scores received from the judge terminal for the identical-pose images.

2. The online management method of claim 1, further comprising classifying the bodybuilding images based on categories and weight classes of the bodybuilding competition.

3. The online management method of claim 1, wherein the determining of the winning bodybuilding image comprises:
transmitting first identical-pose images among the bodybuilding images conforming to the rules to the judge terminal;
receiving scores for the first identical-pose images from the judge terminal;
transmitting second identical-pose images among the bodybuilding images conforming to the rules to the judge terminal;
receiving scores for the second identical-pose images from the judge terminal; and
determining the winning bodybuilding image using the scores for the first identical-pose images and the scores for the second identical-pose images.

4. The online management method of claim 3, wherein the receiving of the scores for the first identical-pose images comprises receiving a score for each of the first identical-pose images.

5. The online management method of claim 4, wherein the transmitting of the second identical-pose images comprises transmitting, to the judge terminal, only second identical-pose images that correspond to first identical-pose images having scores greater than or equal to a reference value.

6. The online management method of claim 3, wherein the receiving of the scores for the first identical-pose images comprises receiving scores for some of the first identical-pose images, and
the transmitting of the second identical-pose images comprises transmitting only second identical-pose images that correspond to the first identical-pose images of which the scores are received.

7. The online management method of claim 1, wherein the determining of the winning bodybuilding image comprises:
determining a plurality of winning-candidate bodybuilding images using the scores;
transmitting the plurality of winning-candidate bodybuilding images to the judge terminal;
receiving, from the judge terminal, final scores for the plurality of winning-candidate bodybuilding images, respectively; and
determining the winning bodybuilding image using the final scores.

8. The online management method of claim 1, wherein the determining of whether the bodybuilding images conform to the rules comprises determining whether the bodybuilding images conform to the rules, based on at least one of dress code violation, pose violation, whether props are worn, whether a plurality of bodybuilding images are images of an identical person, and whether mandatory poses are included.

9. A computer-readable recording medium having recorded thereon a program for executing the online management method of any one of claims 1 to 8 on a computer.

10. A competition server for a bodybuilding competition, the competition server comprising:
a communication unit configured to receive bodybuilding images from an external device; and
a processor configured to determine whether the bodybuilding images conform to rules of the bodybuilding competition, divide each of bodybuilding images conforming to the rules into a plurality of pose images, transmit identical-pose images among the bodybuilding images conforming to the rules to a judge terminal through the communication unit, and determine a winning bodybuilding image by using scores received from the judge terminal for the identical-pose images.

11. The competition server of claim 10, wherein the processor is further configured to transmit first identical-pose images among the bodybuilding images conforming to the rules to the judge terminal through the communication unit, receive scores for the first identical-pose images from the judge terminal, transmit second identical-pose images among the bodybuilding images conforming to the rules to the judge terminal, receive scores for the second identical-pose images from the judge terminal, and determine the winning bodybuilding image by using the scores for the first identical pose-images and the scores for the second identical-pose images.

12. The competition server of claim 10, wherein the processor is further configured to determine a plurality of winning-candidate bodybuilding images by using the scores, transmit the plurality of winning-candidate bodybuilding images to the judge terminal, receive final scores respectively for the plurality of winning-candidate bodybuilding images from the judge terminal, and determine the winning bodybuilding image by using the final scores.

13. The competition server of claim 10, wherein the processor is further configured to determine whether the bodybuilding images conform to the rules, based on at least one of dress code violation, pose violation, whether props are worn, whether a plurality of bodybuilding images are images of an identical person, and whether mandatory poses are included.
